Europäisches Patentamt

European Patent Office

Office européen des brevets

(11) Publication number: **0 485 800 A1**

# EUROPEAN PATENT APPLICATION

(21) Application number: **91118424.0**

(22) Date of filing: **29.10.91**

(51) Int. Cl.5: **F16K 31/06**

(30) Priority: **13.11.90 US 612355**

(43) Date of publication of application:
**20.05.92 Bulletin 92/21**

(84) Designated Contracting States:
**DE FR GB**

(71) Applicant: **SIEMENS AKTIENGESELLSCHAFT**
**Wittelsbacherplatz 2**
**W-8000 München 2(DE)**

(72) Inventor: **Bright, John S.**
**406 Nicewood Drive**
**Newport News, Virginia 23602(US)**
Inventor: **Brinn, Benjamin F., Jr.**
**200 Lewis Robert Lane**
**Williamsburg, Virginia 23185(US)**

(54) Solenoid valve having an armature-mounted filter.

(57) A solenoid-operated valve (10) has a filter cartridge disposed on the valve armature to filter particulate material from leakage fluid before the leakage fluid reaches the interface between the armature and the bore (46) which guides the valve armature (16). The presence of the filter cartridge (40) imposes no restriction on the flow that the valve controls. The cartridge comprises a cartridge body and contains a through-passage through which the leakage fluid is constrained to pass. A mesh filter screen is disposed on the cartridge body to filter flow passing through the through-passage.

FIG.1

## Field of the Invention

This invention relates generally to solenoid-operated fluid valves. More specifically it relates to a solenoid-operated valve which contains a filter medium that is arranged to filter particulate material from fluid that lubricates the interface between the valve armature and the armature guide without imposing a restriction on flow through the fluid circuit controlled by the valve.

## Background and Summary of the Invention

Examples of solenoid-operated valves that can benefit from the present invention are found in commonly-owned U.S. patent application Ser. No. 07/341,576, filed 04/20/89. In a representative valve, the armature is a cylindrical tube whose motion is guided by closely fitting the tube in a cylindrical bore in the valve body. A leakage path for fluid extends longitudinally along the interface that exists between the I.D. of the bore and the O.D. of the tube. The leakage fluid provides lubrication for this tube/bore interface. For obvious reasons, it is desirable to keep the leakage flow as low as possible, and consequently the tube typically has a very close fit to the bore. The intrusion of very small particulates into the tube/bore interface might interfere with the performance of the valve, even possibly to the extent of causing the tube to seize within the bore. If the possibility exists that such particulates will be present in the fluid entering the valve, filtering of the fluid may be required in order to prevent those contaminants from reaching the tube/bore interface where they might impair the valve's performance.

The present invention arises through the recognition that the inclusion of a filter medium suitable for removing the objectionable particulates from fluid entering the valve may impose an unacceptable restriction on flow through the fluid circuit controlled by the valve. The invention provides a solution to this problem by a novel filter construction and arrangement wherein a filter medium that can filter the tiny objectionable particulates which are capable of intruding into the tube/bore interface is disposed in filtering relation to the leakage flow entering the interface, but in non-filtering relation to the flow that is being controlled by the valve. In the disclosed preferred embodiment of the invention which is to be hereinafter described in detail, this construction and arrangement comprises a fine mesh filter screen carried by the armature. More specifically, the fine mesh filter screen is part of a filter cartridge that is disposed on the interior of the armature tube in filtering relation to leakage fluid that passes through the tube before it reaches the tube/bore interface. This disposition of the filter screen precludes it from having any restrictive effect on the flow that is controlled by the valve. Hence, the invention provides a significant enhancement to the commercial acceptance of the representative solenoid-operated valves described in the aforementioned patent application. Principles of the invention are applicable to different valve configurations, including two-way and three-way valves.

Further features, advantages, and benefits of the invention, along with additional ones, will be seen in the ensuing description which is accompanied by a drawing. The drawing illustrates a presently preferred embodiment of the invention according to the best mode contemplated at the present time in carrying out the invention.

## Brief Description of the Drawing

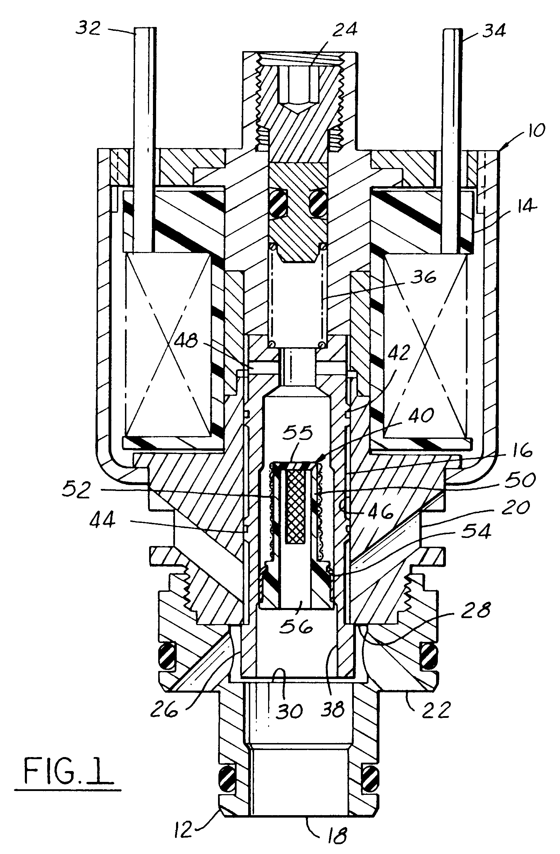

Fig. 1 is a longitudinal cross sectional view through a solenoid-operated valve embodying principles of the present invention.

## Description of the preferred Embodiment

The drawing illustrates a representative solenoid-operated valve 10 comprising: a multiple piece valve body 12; a solenoid 14; and an armature 16. Valve 10 is a three-way valve wherein valve body 12 comprises a supply (pressure) port 18, a dump (drain) port 20, and a control port 22. Armature 16 carries a valving member in the form of an integral circular shoulder 26 at one end. Shoulder 26 is disposed between a pair of circular valve seats 28 and 30 which are spaced coaxially apart on valve body 12. Fig. 1 shows shoulder 26 seated on seat 28 and unseated from seat 30. In this state, the flow path that extends through the valve between supply port 18 and control port 22 and that is circumscribed by valve seat 30 is maximally open while the flow path that extends through the valve between control port 22 and dump port 20 and that is circumscribed by valve seat 28 is fully closed.

The state depicted by Fig. 1 occurs when solenoid 14 is fully energized by the application of an appropriate energizing voltage across its input terminals 32 and 34. In this state, the electromagnetic attractive force that is exerted by solenoid 14 on armature 16 is urging the armature up as viewed in Fig. 1 and is further compressing a helical coil spring 36 that tends to urge the armature down. When solenoid 14 ceases to be energized, spring 36 will move armature 16 down to cause shoulder 26 to unseat from seat 28 and seat on seat 30, in which event the flow path between supply port 18 and control port 22 is fully closed and the flow path between control port 22 and dump port 20 is maximally open. An adjustment mechanism 24 provides for the force of spring 36 to be pre-set to a desired intensity.

The illustrated valve is especially well suited for operation as a proportional control valve that can be pulse width modulated. Thus, the application of a pulse width modulated electrical signal across terminals 32 and 34 will cause the fluid pressures at supply port 18 and dump port 20 to be pulse width modulated to control port 22.

Armature 16 has a circular cylindrical shape that provides a longitudinal through-hole 38. In accordance with principles of the invention, it is within through-hole 38 that a filter cartridge 40 is disposed. Armature 16 also has two coaxially spaced apart, circular, annular bearing seals 42 and 44 that extend around its outside. These bearing seals, each of which is in the form of a centrally grooved ridge that is integral with the armature, provide for the closely sealed sliding fit of the armature within a segment of a central circular bore 46 of valve body 12.

Through-hole 38 serves to convey the fluid pressure at supply port 18 to the zone 48 at the far end of the armature. The supply fluid pressure is thereby applied to the top face of bearing seal 42. The bottom face of bearing seal 44 is communicated to dump port 20 and is therefore at dump pressure. The result is that the pressure difference between supply pressure and dump pressure is applied across the two bearings 42 and 44. While the bearing seals are highly effective, they are not perfect, and therefore will allow a certain leakage flow along the interface that exists between armature 16 and bore 46. This leakage flow provides a presence of fluid along the armature/bore interface which is beneficial in lubricating the armature's motion. While it is desirable to obtain a very closely sealed sliding fit of the armature in the bore in order to minimize leakage, such a close fit gives rise to the possibility that minute particles in the leakage flow might interfere with proper armature operation, and this is where the invention provides an excellent solution to such a potential problem.

Cartridge 40 comprises a cylindrical plastic body 50, a fine mesh screen 52, a brass ring 54, and an end cap 55 in assembled relation. Body 50 contains a passage 56 that is open at its lower end as viewed in Fig. 1 and that is also open at its sidewall. Cap 55 closes the upper end of the body. Screen 52 is formed to a cylindrical shape and disposed around the outside of the sidewall of body 50 in covering relation to the two openings of passage 56 that are in opposite halves of the body's sidewall. Ring 54 provides for the press-fit retention of the cartridge in through-hole 38, assembly of the cartridge to the armature being conducted by pressing the cartridge into the armature to a suitable depth.

The organization and arrangement of the cartridge and armature are such that fluid that has entered the lower end of through-hole 38 is constrained to pass through filter screen 52 before it arrives at zone 48. In this way the fluid is strained by screen 52 before the fluid can reach the armature/bore interface. By making the screen mesh sufficiently fine, fluid-entrained particles which might otherwise pass to the armature/bore interface are screened and collected at the upstream face of screen 52. Yet the screen imposes no restriction on the flows between the ports 18, 20, and 22.

If the screen becomes unduly clogged by collected particulates, the screen can be cleared by back-flushing. The parts of the filter cartridge can be fabricated from conventional materials by conventional manufacturing techniques. For example, body 50 and screen 52 can be plastic.

While a presently preferred embodiment of the invention has been illustrated and described, it is to be appreciated that the inventive principles can be embodied in other equivalent constructions.

## Claims

1. A solenoid valve assembly comprising a valve body, actuator means comprising a solenoid on said valve body, a valve armature that is arranged to cooperate with a valve seat which is disposed on said valve body in circumscription of a flow path between a first port on said valve body and a second port on said body and that is operated by said actuator means in response to operation of said solenoid to control fluid flow between said first and second ports, said valve body also comprising guide means for guiding motion of said armature that is caused by said actuator means, and means providing a leakage path for fluid from one of said ports to flow along said guide means and provide lubrication between said armature and said guide means, characterized in that said valve assembly comprises filter means for filtering certain particulate material from fluid, and said filter means is disposed in non-filtering relation to flow between said first and second ports and in filtering relation to flow through said leakage path whereby said filter means filters flow through said leakage path but does not present a restriction to flow between said first and second ports.

2. A solenoid valve assembly as set forth in claim 1 further characterized in that said valve body comprises a third port, said valve armature also controls flow between said second and third ports as said valve armature is operated by said actuating means, and said leakage path extends between said first and third ports.

3. A solenoid valve assembly as set forth in claim 2 characterized further in that there is provided means for energizing said solenoid with a pulse-width-modulated electrical input to cause the fluid pressures at said first and third ports to be pulse-width-modulated to said second port.

4. A solenoid valve assembly as set forth in claim 2 characterized further in that said valve armature is tubular in shape and said guide means is disposed around an exterior side surface of said valve armature.

5. A solenoid valve assembly as set forth in claim 4 characterized further in that said guide means comprises a cylindrical bore in said valve body and said valve armature comprises bearing seal means providing a close fit for said valve armature in said circular cylindrical bore.

6. A solenoid valve assembly as set forth in claim 5 in which cylindrical bore is a circular cylindrical bore and said bearing seal means comprises plural, coaxially spaced apart, integral, circular, annular bearing seals extending around the outside of said valve armature.

7. A solenoid valve assembly as set forth in claim 4 characterized further in that a portion of said leakage path is through said valve armature and said filter means is disposed within said valve armature.

8. A solenoid valve assembly as set forth in claim 7 characterized further in that said filter means comprises a filter cartridge having a cartridge body and a filter screen supported on said cartridge body to filter flow through said leakage path.

9. A solenoid valve assembly as set forth in claim 7 characterized further in that said filter means comprises a filter cartridge that has a press-fit in said valve armature.

10. A solenoid valve assembly comprising a valve body, actuator means comprising a solenoid on said valve body, a valve armature that is arranged to cooperate with a valve seat which is disposed on said valve body in circumscription of a flow path between a first port on said valve body and a second port on said body and that is operated by said actuator means in response to operation of said solenoid to control fluid flow between said first and second ports, said body also comprising guide means for guiding motion of said valve armature that is caused by said actuator means, and means forming a flow path which is internal to said valve body and through which fluid flows to provide lubrication between said valve armature and said guide means, characterized in that said valve assembly comprises filter means for filtering certain particulate material from fluid, and said filter means is disposed in non-filtering relation to flow between said first and second ports and in filtering relation to flow through said flow path whereby said filter means filters flow through said flow path but not flow between said first and second ports

11. A solenoid valve assembly as set forth in claim 10 characterized further in that said flow path is a flow path for leakage fluid that enters said valve assembly at one of said ports.

12. A solenoid valve assembly as set forth in claim 10 characterized further in that said filter means is carried by said valve armature.

13. A solenoid valve assembly as set forth in claim 12 characterized further in that said valve armature is tubular in shape, said guide means comprises a circular cylindrical bore that is in said valve body and is disposed around an exterior side surface of said valve armature, and said valve armature contains plural, coaxially spaced apart, circular, annular bearing seals extending around the outside of said valve armature and fitting closely in said circular cylindrical bore.

14. A solenoid assembly as set forth in claim 13 characterized further in that said bearing seals are integral with said valve armature.

15. A solenoid valve assembly as set forth in claim 13 characterized further in that said filter means comprises a filter cartridge having a cartridge body and a filter screen supported on said cartridge body to filter flow through said leakage path.

16. Valve armature structure for a solenoid-operated fluid valve comprising a valve armature characterized in that said valve armature has a through-passage for flow and filter means is disposed on said valve armature for filtering flow passing through said through-passage.

17. Valve armature structure as set forth in claim 15 characterized further in that said filter means comprises a filter cartridge disposed in said through-passage.

FIG.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | PATENT ABSTRACTS OF JAPAN, vol. 14, no. 364 (M-1007)[4307], 7th August 1990; & JP-A-2 129 480 (AISIN) 17-05-1990 | 1,10 | F 16 K 31/06 |
| A | DE-A-3 404 188 (REXROTH) * Page 6, line 18 - page 7, line 16 * | 1,10 | |
| A | DE-A-3 309 904 (REXROTH) * Page 8, line 26 - page 9, line 16 * | 1,10 | |
| A | DE-A-2 926 320 (KLUNA) * Page 13, lines 12-19 * | 1,10 | |
| P,A | PATENT ABSTRACTS OF JAPAN, vol. 15, no. 42 (M-1076)[4570], 31st January 1991; & JP-A-2 278 084 (MITSUBISHI) 14-11-1990 | | |

TECHNICAL FIELDS
SEARCHED (Int. Cl.5)

F 16 K
H 01 F

The present search report has been drawn up for all claims

| Place of search | Date of completion of the search | Examiner |
|---|---|---|
| THE HAGUE | 27-01-1992 | VERELST P.E.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)